(19) Europäisches Patentamt
European Patent Office
Office européen des brevets

(11) **EP 1 724 134 B1**

(12) **EUROPEAN PATENT SPECIFICATION**

(45) Date of publication and mention
of the grant of the patent:
**04.07.2018 Bulletin 2018/27**

(51) Int Cl.:
***B60H 1/32*** *(2006.01)* ***F01P 7/16*** *(2006.01)*

(21) Application number: **06009980.1**

(22) Date of filing: **15.05.2006**

(54) **Air conditioner**

Klimaanlage

Conditionneur d'air

(84) Designated Contracting States:
**DE FR GB IT**

(30) Priority: **16.05.2005 JP 2005142596**

(43) Date of publication of application:
**22.11.2006 Bulletin 2006/47**

(73) Proprietor: **SANYO ELECTRIC CO., LTD.
Moriguchi-shi, Osaka 570-8677 (JP)**

(72) Inventors:
• **Hirata, Ryota
Ora-gun
Gunma 370-0532 (JP)**
• **Nakajima, Katsunori
Ora-gun
Gunma 370-0535 (JP)**
• **Noguchi, Taisei
Ota-shi
Gunma 373-0861 (JP)**
• **Higuchi, Terukazu
Ota-shi
Gunma 373-0042 (JP)**
• **Yoshinaga, Setsuri
Ota-shi
Gunma 373-0806 (JP)**

(74) Representative: **Glawe, Delfs, Moll
Partnerschaft mbB von
Patent- und Rechtsanwälten
Postfach 13 03 91
20103 Hamburg (DE)**

(56) References cited:
**EP-A2- 1 334 851 EP-A2- 1 334 852
GB-A- 2 401 166 JP-A- 3 090 430
JP-A- 6 272 557 JP-A- 2002 332 841**

**Description**

BACKGROUND OF THE INVENTION

1. Field of the Invention

The present invention relates to an air conditioner equipped with an engine for driving a compressor in a refrigerant circuit, and a cooling water circuit for circulating cooling water to the engine.

2. Description of the Related Art

There has been hitherto known an air conditioner equipped with an engine for driving a compressor in a refrigerant circuit and a cooling water circuit for circulating cooling water to the engine. For example, JP-A-2003-232581 discloses one of this type of air conditioners. According to this air conditioner, a plate type heat exchanger for carrying out the heat exchange between refrigerant in the refrigerant circuit and cooling water is disposed in the cooling water circuit, and when the temperature of the cooling water rises up during heating operation, the cooling water is made to flow into the plate type heat exchanger by a wax type three-way valve to promote the heat exchange between the refrigerant and the cooling water, thereby enhancing the heating capability.

Recently, the efficiency of the engine and the efficiency of the compressor have been increased, and in connection with the recent increase of the efficiencies of these parts, the exhaust heat amount of the engine has been reduced. Therefore, it takes a longer time that the temperature of the cooling water reaches a fixed valve switching temperature (for example, 70°C) of the wax type three-way valve, which constitutes a limiting factor of the rising performance of the heating operation.

Air conditioners equipped with an engine for driving a compressor in a refrigerant circuit and a cooling water circuit for circulating cooling water to the engine are known from EP1334852, JP03090430, EP1334851 or JP2002332841.

SUMMARY OF THE INVENTION

The present invention has been implemented in view of the foregoing situation, and has an object to provide an air conditioner that can enhance the rising performance of heating operation.

In order to attain the above object, according to the present invention, an air conditioner comprises the features of claim 1. According to this construction, under heating operation, the cooling water target temperature is varied in accordance with at least one of the outside air temperature and the temperature of the room to be air-conditioned, and when the cooling water temperature is higher than the cooling water target temperature, the electrically-driven three-way valve is controlled so as to increase the cooling water flowing in the second passage. Therefore, as compared with a case where a wax type three-way valve having a fixed valve switching temperature is used, the heating of the refrigerant at the rise-up of the heating operation can be promoted and thus the rising performance of the heating operation can be enhanced.

Furthermore, in the above construction, a load level of the engine is detected, and when the load level exceeds a predetermined level, the controller may correct the cooling water target temperature to the minus side.

According to this construction, the overshoot caused by the delayed response until the engine exhaust heat reflects the cooling water temperature can be avoided, and the overheat and knocking of the engine can be avoided.

Furthermore, in the above construction, when the state that the cooling water temperature is equal to a predetermined low temperature or less is continued for a first set time or more, the controller may set the cooling water temperature to a predetermined forcing target temperature so that the cooling water flows through only the first passage.

According to this construction, the cooling water flowing in the heat exchanger for heating the refrigerant is reduced and thus the cooling water temperature can be increased, so that deposition of mayonnaise sludge can be avoided. In the case where the cooling water temperature is set to the forcing target temperature as described above, the setting of the cooling water temperature to the forcing target temperature is preferably released when the state that the cooling water temperature is equal to a predetermined high temperature or more is continued for a second set time or more.

Furthermore, in the above construction, an exhaust gas heat exchanger for carrying out the heat exchange between exhaust gas of the engine and the cooling water may be disposed in the first passage. Still furthermore, under cooling operation, the controller may judge whether an indoor unit of the air conditioner is under a freezing temperature, and if it is judged that the indoor unit of the air conditioner is under the freezing temperature, the controller may set the cooling water target temperature to a predetermined low temperature so that the cooling water flows in the second passage.

As described above, according to the present invention, under heating operation, the cooling water target temperature is varied in accordance with at least one of the outside air temperature and the temperature of the room to be air-conditioned, and the electrically-driven three-way valve is controlled so as to increase the cooling water flowing in the second passage including the refrigerant heating heat exchanger for carrying out the heat exchange between the cooling water in the cooling water circuit and the refrigerant in the refrigerant circuit when the cooling water temperature is higher than the cooling water target temperature. Therefore, as compared with a case where a wax type three-way valve having a fixed valve switching temperature is used, the refrigerant heating at the rising time of the heating operation can be promoted, and the rising performance of the heating operation can be enhanced.

BRIEF DESCRIPTION OF THE DRAWINGS

Fig. 1 is a diagram showing a gas heat pump type air conditioner according to an embodiment of the present invention;
Fig. 2 is a flowchart showing the control of an electrically-driven three-way valve; and
Fig. 3 is a diagram showing setting of a cooling water target temperature.

DETAILED DESCRIPTION OF THE PREFERRED EMBODIMENTS

Preferred embodiments according to the present invention will be described hereunder with reference to the accompanying drawings.

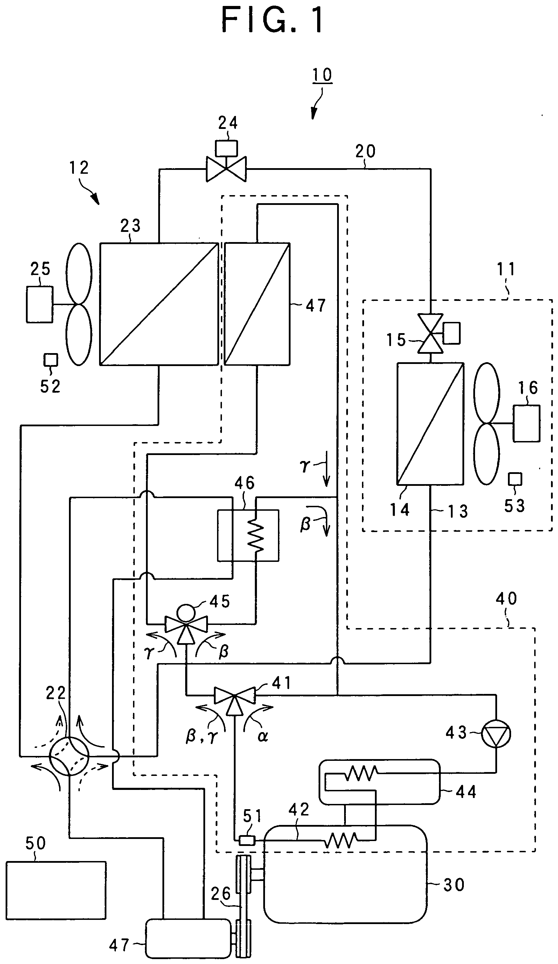

Fig. 1 is a diagram showing the construction of a gas heat pump type air conditioner (hereinafter referred to as air conditioner) 10 according to an embodiment.
The air conditioner 10 has an indoor unit 11 and an outdoor unit 12, and an indoor refrigerant pipe 13 of the indoor unit 11 is connected to an outdoor refrigerant pipe 20 of the outdoor unit 12. The indoor unit 11 is disposed in a room to be air-conditioned, and an indoor heat exchanger 14 and an indoor expansion valve 15 are provided in the indoor refrigerant pipe 13. Furthermore, an indoor fan 16 for blowing indoor air (air in the room to be air conditioned) to the indoor heat exchanger 14 is disposed in the indoor unit 11.
The outdoor unit 12 is disposed outdoor, and a compressor 21, a four-way valve 22, an outdoor heat exchanger 23 and an outdoor expansion valve 24 are provided in the outdoor refrigerant pipe 20. Furthermore, an outdoor fan 25 for blowing outdoor air to the outdoor heat exchanger 23 is disposed in the outdoor unit 12. The compressor 21 is connected to a gas engine 30 through a driving force transmitting mechanism 26, and the compressor 21 is rotated by the gas engine 30. Refrigerant is filled in the refrigerant pipes 13 and 20, and the refrigerant is circulated in the refrigerant pipes 13 and 20 by the compressor 21 driven by the gas engine 30. That is, the refrigerant circuit is constructed by the refrigerant pipes 13 and 20 and the respective parts disposed in the refrigerant pipes 13 and 20.
A cooling water circuit 40 for circulating cooling water in the gas engine 30 and withdrawing heat of the gas engine 30 is disposed in the outdoor unit 12. The cooling water circuit 40 is equipped with an electrically-driven three-way valve 41, and the entrance of the electrically-driven three-way valve 41 is connected to the exit of a cooling water passage 42 of the gas engine 30 through a pipe. One of the two exits of the electrically-driven three-way valve 41 is connected to a cooling water pump 43 and an exhaust gas heat exchanger 44 through a pipe. The other end of the exhaust gas heat exchanger 44 is connected to the entrance of the cooling water passage 42 through a pipe. That is, a return first passage (a passage represented by reference numeral $\alpha$) for returning the cooling water passing through the gas engine 30 to the gas engine 30 is formed by a pipe passage for connecting the electrically-driven three-way valve 41, the cooling water pump 43 and the exhaust gas heat exchanger 44. Here, the exhaust gas heat exchanger 44 is a heat exchanger for carrying out the heat exchange between the exhaust gas of the gas engine 30 and the cooling water.
Furthermore, the other exit of the electrically-driven three-way valve 41 is connected to the entrance of an electrically-driven-three-way valve 45 for the cooling water through a pipe. One of the exits of the cooling water electrically-driven three-way valve 45 is connected to one end of a heat exchanger 46 for heating the refrigerant through a pipe, and the other exit of the cooling water electrically-driven three-way valve 45 is connected to one end of a radiator 47 through a pipe. The other end of the heat exchanger 46 for heating the refrigerant and the other end of the radiator 47 are connected to the first passage through a pipe. That is, there are formed a second passage (a passage represented by reference character $\beta$ in Fig. 1) in which the cooling water passed through the gas engine 30 is passed through the electrically-driven three-way valve 41, the cooling water electrically-driven three-way valve 45 and the heat exchanger 46 for heating the refrigerant and returned to the first passage, and a third passage (a passage represented by reference character $\gamma$ in Fig. 1) in which the cooling water passed through the gas engine 30 is passed through the electrically-driven three-way valve 41, the cooling water electrically-driven three-way valve 45 and the radiator 47 are passed and returned to the first passage.

Here, the refrigerant heating heat exchanger 46 is a heat exchanger for carrying out the heat exchange between the refrigerant in the refrigerant circuit and the cooling water, and a plate type heat exchanger or double-pipe type heat exchanger may be applied as the heat exchanger 46. Furthermore, the radiator 47 is disposed to be adjacent to the outdoor heat exchanger 23 so that air blown out from the outdoor fan 25 is supplied to the radiator 47, and cools the cooling water passed through the radiator 47. The radiator 47 may be assembled integrally with the outdoor heat exchanger 23.

A controller 50 for controlling the air conditioner 10 is disposed in the outdoor unit 12. The controller 50 is connected to a cooling water temperature sensor 51 for measuring the temperature of the exit of the cooling water passage 42 of the gas engine 30, an outside air temperature sensor 52 for measuring the temperature of the outside air, a room temperature sensor 53 for measuring the temperature of the inside of the room (the room to be air conditioned) in which the indoor unit 11 is disposed, respective temperature sensors (not shown) disposed in the respective heat exchangers 14 and 23, etc. Furthermore, an operating device (not shown) operated by a user through an indoor controller (not shown) of the indoor unit is connected to the controller 50. The controller 50 controls the gas engine 30, the four-way valve 22, the respective expansion valves 15 and 24, etc. on the basis of a user instruction input through the operating device or the like to carry out an air conditioning operation (heating operation, cooling operation, etc.). Furthermore, under the air conditioning operation, the controller 50 controls the cooling water pump 43, the electrically-driven three-way valve 41 and the cooling water electrically-driven three-way valve 45 to allocate the cooling water into any passage (s) of the first to third passages or divide the cooling water to the respective passages, thereby carrying out cooling water control.

Next, the control of the air conditioning operation excluding the cooling water control will be described.

When cooling operation is carried out, the controller 50 switches the four-way valve 22 to a position indicated by a solid line (a position for cooling operation) as shown in Fig. 1 so that the refrigerant discharged from the compressor 21 is made to flow in a direction as indicated by a solid-line arrow, whereby the outdoor heat exchanger 23 functions as a condenser and the indoor heat exchanger 14 functions as an evaporator. On the other hand, when heating operation is carried out, the controller 50 switches the four-way valve 22 to a position indicated by a broken line (a position for heating operation) as shown in Fig. 1 so that the refrigerant discharged from the compressor 21 is made to flow in a direction indicated by a broken-line arrow, whereby the indoor heat exchanger 14 functions as a condenser and the outdoor heat exchanger 23 functions as an evaporator. The control of the respective expansion valves 15 and 24 and the air blowing fans 16 and 25 under air conditioning operation is substantially the same as the conventional air conditioner, and thus the description thereof is omitted.

Next, the cooling water control will be described. The controller 50 drives the cooling water pump 43 under air conditioning operation(when the gas engine is operated). With respect to the electrically-driven three-way valve 45 for the cooling water, the electrically-driven three-way valve 45 is controlled to be switched so that the cooling water flows into the radiator 47 under cooling operation and the cooling water flows into the heat exchanger 46 for heating the refrigerant under the heating operation. However, even under cooling operation, when the indoor unit 11 is under a freezing-temperature condition or the like, the cooling water electrically-driven three-way valve 45 is controlled so that the cooling water flows into the heat exchanger 46 for heating the refrigerant.

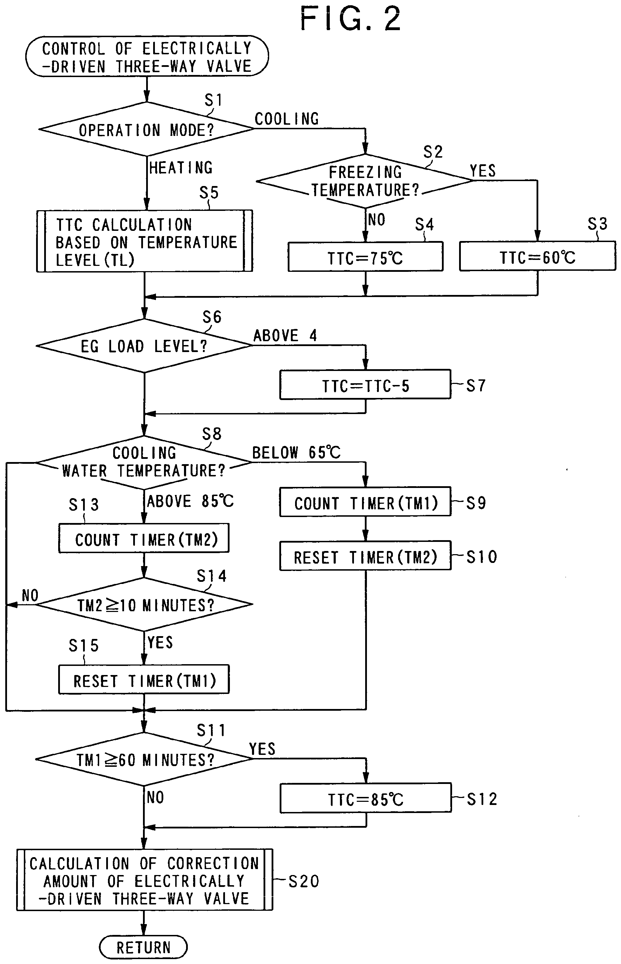

Fig. 2 is a flowchart showing the control of the electrically-driven three-way valve 41.

The controller 50 first judges an operation mode (step S1). If the operation mode is a cooling operation mode (step S1: cooling), the controller judges whether the indoor unit 11 is under the freezing temperature (step S2). Specifically, he controller 50 achieves information on indoor coil temperature by a temperature sensor (not shown), and if it judges on the basis of the indoor coil temperature whether the indoor unit 11 is under the freezing temperature (step S2 : YES), the controller 50 sets a cooling water target temperature TTC to a low temperature (60°C). If the controller 50 judges that the indoor unit 11 is not under the freezing temperature, the controller 50 sets the cooling water target temperature TTC to a normal temperature (75°) (step S4) . In place of the judgment of the step S2 using the indoor coil temperature, the judgment of the step S2 may be executed by measuring a low-pressure side refrigerant pressure of the indoor heat exchanger 14 with a pressure sensor and judging on the basis of the refrigerant pressure whether the indoor unit 11 is under the freezing temperature.

On the other hand, under heating operation (step S1: heating), the controller 50 shifts its processing to step S5 to achieve information on the outside air temperature and the indoor temperature through temperature sensors 52 and 53, calculates a temperature level TL representing the temperature condition of the air conditioner 10 from these temperature information according to the following equation (1):

$$TL = (\text{outside air temperature} - 5) + (\text{room temperature} - 10) \times 2 \quad \dots (1)$$

The temperature level TL shown in the equation (1) is an example achieved when it is assumed that the effect of the room temperature is greater than the outside air temperature. In short, each value can be freely changed in such a range that the temperature level TL reflecting the outside air temperature and the room temperature can be calculated.

Subsequently, the controller 50 sets the cooling water target temperature TCC from the temperature level TL by using a pre-held conversion table. Here, as this conversion table is used a table in which a lower cooling water target temperature TTC is set as it is more possibly estimated that it is difficult to increase the refrigerant pressure of the refrigerant circuit because the indoor/outdoor temperature is low, that is, a table for setting the cooling water target temperature TTC proportional to the temperature level TL.

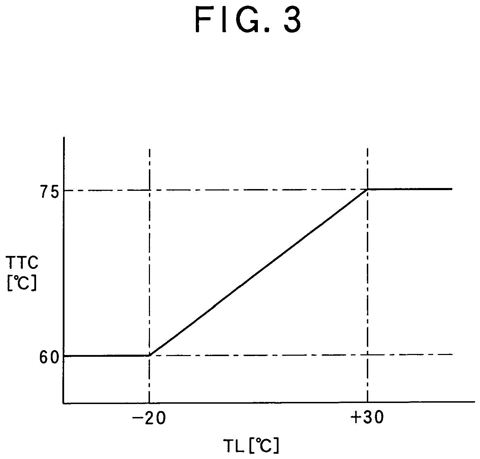

More specifically, in this embodiment, as shown in Fig. 3, when the temperature level TL ranges from -20 °C to 30 °C, the cooling water target temperature TTC is set to the temperature (the lower limit temperature of 60°C to a normal temperature of 75 °C) which is linearly proportional to the temperature level TL. When the temperature level TL is equal to 30 °C or more, the cooling water target temperature TTC is set to the normal temperature 75°C, and when the temperature level TL is equal to -20°C or less, the cooling water target temperature TTC is set to the lower limit temperature 60°C. Here, the normal temperature 75°C corresponds to the cooling water target temperature TTC under the state that increase of the refrigerant pressure can be expected, and in other words, it is substantially equal to the valve switching temperature of the wax type three-way valve in the conventional cooling water circuit using the wax type three-way valve in place of the electrically-driven three-way valve 41. The cooling water target temperature TTC may be calculated by using a conversion equation of converting the temperature level TL to the cooling water target temperature TTC in place of the conversion table.

As described above, after the cooing water target temperature TTC corresponding to the operation mode and the temperature level TL is set, the controller 50 corrects the cooling water target temperature TTC corresponding to the load of the gas engine 30 (steps S6, S7).

Specifically, the controller 50 stores therein a data base in which the rotation number of the engine, the opening degree of a fuel adjusting valve, the opening degree of a throttle, the torque value of the gas engine 30, the heat efficiency of the engine, an IG (ignition) demand voltage, the flow rate of fuel gas, and λ (excess air ratio) are stored in association with one another. Measurable information (the engine rotation number, the opening degree of the fuel adjusting valve and the opening degree of the throttle) is achieved under the control of the gas engine 30, the present torque value, the IG demand voltage and λ are achieved by referring to the data base, and the load level of the gas engine 30 is specified from these information. In this embodiment, the load level is set to seven stages from 0 (low load) to 6 (heavy load).

When the load of the gas engine 30 is high (the load level is equal to 4 or more) (step S6), that is, under the situation that the cooling water temperature rises up quickly, the controller 50 corrects the cooling water temperature TTC to a value lower by -5°C in order to correct the cooling water temperature TTC to the minus side (step S7). On the other hand, when the load of the gas engine 30 is low (the load level is equal to 3 or less), the controller 50 does not correct the cooling water target temperature TTC.

Subsequently, the controller 50 obtains the cooling water temperature TC by a cooling water temperature sensor 51. When the cooling water temperature TC is equal to a preset low temperature (65°C) or less (step S8: 65°C or less), in order to prevent occurrence of mayonnaise sludge because the state that the temperature of the cooling water is continued, a counting operation of a timer TM1 as a measuring timer for counting the continuing time of the low temperature state of the cooling water is started (step S9). Furthermore, a timer TM2 as a measuring timer for measuring the continuing time of the high temperature of the cooling water is reset (step S10) . Then, when the count time of the timer TM1 does not reach a first set time (for example, 60 minutes) (step S11: NO), the controller 50 calculates a correction amount ΔSTEP for the electrically-driven valve from the difference between the cooling water target temperature TTC set in the processing of the steps S1 to S7 and the cooling water temperature TC as shown in the following equation (2), and controls the electrically-driven three-way valve 41 by only the correction amount ΔSTEP for the electrically-driven valve (step S20). Thereafter, the controller 50 shifts its processing to the processing of the step S1.

$$\Delta STEP = k(TC-TTC) \quad \dots (2)$$

Here, k represents a predetermined coefficient.

In the processing of this step S20, under heating operation, the electrically-driven three-way valve 41 is controlled so that the cooling water passing through the gas engine 30 and flowing along the second passage is increased when the cooling water temperature TC is higher than the cooling water target temperature TTC. Accordingly, the cooling water flowing through the heat exchanger 46 for heating the refrigerant is increased, and the heating of the refrigerant is promoted by the cooling water.

As described above, according to this construction, under heating operation, the cooling water target temperature TTC is set to be proportional to the temperature level TL reflecting the outside air temperature and the room temperature in the processing of step S5, so that the cooling water target temperature TTC (lower limit temperature: 60°C) is set to be lower as it is more possibly estimated that it is difficult to increase the refrigerant pressure of the refrigerant circuit because the indoor/outdoor temperature is low.

Therefore, under the condition that it is difficult to increase the refrigerant pressure of the refrigerant circuit even when the cooling water temperature TC is low (for example, 65°C or less), the cooling water flowing in the heat exchanger 46 for heating the refrigerant is increased, and the heating of the refrigerant is promoted, thereby enhancing the heating capability.

Furthermore, the enhancement of the heating capability increases the rising speed of the indoor temperature, and thus the increase of the refrigerant pressure is further promoted. Therefore, the increase of the refrigerant pressure applies a heavier load on the gas engine 30, so that the exhaust heat amount of the gas engine 30 is increased, the rise-up speed of the cooling water temperature is increased and also the heating of the refrigerant is promoted, thereby enhancing the heating capability. Accordingly, the heating capability in the heating operation particularly under the state that the outside air temperature is low and also the room temperature is also low, that is, the heating capability at the rise-up time of the heating operation can be enhanced.

Furthermore, under cooling operation, when the indoor unit 11 is under the freezing temperature, the cooling water target temperature TTC is set to the lower limit temperature (60°C) (steps S2, S3), and also the cooing water electrically-driven three-way valve 45 is controlled to be switched so that the cooling water flows into the heat exchanger 46 for heating the refrigerant. Therefore, in step S20, the electrically-driven three-way valve 41 is controlled so that the cooling water flowing in the second passage is increased. Accordingly, the refrigerant is heated by the refrigerant heating heat exchanger 46, so that the low-pressure refrigerant in the refrigerant circuit is increased and the indoor heat exchanger 14 is prevented from being frozen.

Furthermore, under cooling operation, when the indoor unit 11 is not under the freezing temperature, the electrically-driven three-way valve 45 for the cooling water is controlled to be switched so that the cooling water flows into the radiator 47. Therefore, the cooling water supplied to the cooling water electrically-driven three-way valve 45 flows through the third passage and is cooled in the radiator 47.

In the air conditioner 10, the exhaust gas heat exchanger 44 is disposed in the first passage of the cooling water circuit 40, and thus the heating operation of the cooling water can be carried out by circulating the cooling water in the first passage, and the heat withdrawing efficiency of the gas engine 30 can be enhanced. If the gas engine 30 continues its high-load state under warm-up operation, the response until the engine exhaust heat reflects the cooling water temperature TC is delayed, and overshoot occurs due to the delay of the response, so that overheat or knocking of the gas engine 30 may occur.

Therefore, in this construction, under the condition that the load level of the gas engine 30 is high, the target temperature TCC of the cooling water is corrected to the minus side (steps S6, S7), whereby the warm-up operation can be more early stopped under the state that the load level of the gas engine 30 is high as compared with the case where the load level of the gas engine 30 is low. Accordingly, the cooling water temperature TC can be reduced by the heat exchanger 46 for heating the refrigerant or the radiator 47, and the overheat and knocking of the gas engine 30 can be avoided.

Furthermore, as shown in Fig. 2, the thus-constructed controller 50 starts the count of the timer TM1 when the cooling water temperature TC is equal to a low temperature (65°C) or less (step S9). Furthermore, when the count time of the timer TM1 exceeds a first set time (for example, 60 minutes) (step S11: YES), the cooling water target temperature TTC is set to a forcing target temperature (for example, upper limit temperature of 85°C), and then the control of the electrically-driven three-way valve 41 is carried out (step S20) . Accordingly, when the condition that the cooling water temperature TC is low, that is, the condition that mayonnaise sludge is liable to be deposited is continued for a relatively long time, the cooling water target temperature TTC is surely set to be higher than the cooling water temperature TC. Accordingly, in the processing of the step S20, the electrically-driven three-way valve 41 is controlled so as to increase the cooling water passing through the gas engine 30 and flowing in the first passage, and the air conditioner is shifted to the warm-up state. As a result, the cooling water temperature TC is increased by heat of the exhaust gas, and even when mayonnaise sludge is deposited, the sludge can be melted, so that the deposition of the mayonnaise sludge can be avoided.

In this case, the cooling water temperature TC increases, and when the controller 50 judges in step S8 that the cooling water temperature TC is equal to the upper limit temperature (85°C) or more, the count of the timer TM2 as the measuring timer for measuring the continuing time of the high temperature of the cooling water is started (step S13). When the count time of the timer TM2 exceeds a second set time (for example, 10 minutes) (step S14: YES), the timer TM1 is reset (step S15), and then the controller 50 shifts the processing to the processing of step S11.

Accordingly, when the time for which the cooling water temperature TC is not less than the upper limit temperature (85°C) at which the mayonnaise sludge can be melted exceeds the second set time, the judgment of the step S11 is negated, and the setting of the cooling water target temperature TTC to the forcing target temperature is released. Accordingly, the control operation is returned to the control of the electrically-driven three-way valve 41 based on the cooling water target temperature TTC set in the processing of the steps S1 to S7. The above operation is the cooling water control operation containing the control of the electrically-driven three-way valve 41.

As described above, according to this embodiment, under heating operation, the cooling water target temperature TTC is varied in accordance with the outside air temperature and the indoor temperature, and when the cooling water temperature TC is higher than the cooling water target temperature TTC, the electrically-driven three-way valve 41 is controlled so as to increase the cooling water flowing in the second passage. Therefore, as compared with the case where the wax type three-way valve having the fixed valve switching temperature, the heating of the refrigerant at the rise-up time of the heating operation can be promoted and the rising performance of the heating operation can be enhanced.

Furthermore, under the condition that the load level of the gas engine 30 is high, the cooling water target temperature TTC is corrected to the minus side. Therefore, the overshoot caused by the delay of the response until the engine exhaust heat reflects the cooling water temperature TC can be avoided, and the overheat and the knocking of the gas engine 30 can be avoided.

Still furthermore, when the state that the cooling water temperature TC is low is continued, the cooling water target temperature TTC is set to the forcing target temperature higher than the cooling water temperature TC, so that the cooling water temperature is increased by the warm-up operation and the deposition of the mayonnaise sludge can be avoided. Accordingly, the rising performance of the heating operation can be enhanced, and the engine can be sufficiently protected.

The present invention is not limited to the above-described embodiment, and various modifications may be made. For example, in the above embodiment, the cooling water target temperature TTC is varied in accordance with the outside air temperature and the indoor temperature. However, the cooling water target temperature TTC may be varied in accordance with at least one of the outside air temperature and the indoor temperature.

### Claims

1. An air conditioner having an engine (30) for driving a compressor (21) in a refrigerant circuit, a cooling water circuit (40) for circulating cooling water in the engine (30), a refrigerant heating heat exchanger for carrying out the heat exchange between the cooling water in the cooling water circuit and the refrigerant in the refrigerant circuit, and a controller (50) for controlling parts constituting the air conditioner, wherein the cooling water circuit (40) comprises a first passage for returning the cooling water passing through the engine (30) to the engine (30), a second passage for supplying the refrigerant heating heat exchanger with the cooling water that is branched from the first passage and passes through the engine, and **characterized in that** the cooling water circuit (40) comprises an electrically-driven three-way valve (41) for sharing the cooling water to the first passage and the second passage, and the controller sets a cooling water target temperature (TTC) so that the cooling water target temperature is variable in accordance with at least one of an outside air temperature and the temperature of a room to be air-conditioned under heating operation, and controls the electrically-driven three-way valve (41) so that the cooling water flowing in the second passage is increased when the cooling water temperature is higher than the cooling water target temperature, wherein a temperature level (TL) representing the temperature condition of the air conditioner is calculated from the outside air temperature and the room temperature, the cooling water target temperature (TTC) is determined from the calculated temperature level (TL) by using a conversion table in which the relationship between the temperature level (TL) and the cooling water target temperature (TTC) is held in advance or by using a conversion equation of converting the temperature level (TL) to the cooling water target temperature (TTC), and a lower cooling water target temperature TTC is set as it is more possibly estimated that it is difficult to increase the refrigerant pressure of the refrigerant circuit because the indoor/outdoor temperature is low.

2. The air conditioner according to claim 1, wherein a load level of the engine is detected, and when the load level exceeds a predetermined level, the controller corrects the cooling water target temperature to the minus side.

3. The air conditioner according to claim 1, wherein when the state that the cooling water temperature is equal to a predetermined low temperature or less is continued for a first set time or more, the controller sets the cooling water temperature to a predetermined forcing target temperature so that the cooling water flows through only the first passage.

4. The air conditioner according to claim 3, wherein when the cooling water temperature is set to the forcing target temperature, the setting of the cooling water temperature to the forcing target temperature is released if the state that the cooling water temperature is equal to a predetermined high temperature or more is continued for a second set time or more.

**5.** The air conditioner according to claim 1, wherein an exhaust gas heat exchanger for carrying out the heat exchange between exhaust gas of the engine and the cooling water is disposed in the first passage.

**6.** The air conditioner according to claim 1, wherein under cooling operation, the controller judges whether an indoor unit of the air conditioner is under a freezing temperature, and if it is judged that the indoor unit of the air conditioner is under the freezing temperature, the controller sets the cooling water target temperature to a predetermined low temperature so that the cooling water flows in the second passage.

**Patentansprüche**

**1.** Klimaanlage mit einer Maschine (30) zum Antrieb eines Kompressors (21) in einem Kühlkreislauf, einem Kühlwasserkreislauf (40) zum Zirkulieren von Kühlwasser in der Maschine (30), einem Kühlmittel-Heizwärmetauscher zum Austragen der Wärme, die zwischen dem Kühlwasser in dem Kühlwasser-Kreislauf und dem Kühlmittel in dem Kühlmittel-Kreislauf ausgetauscht wird, und einer Steuerung (50) zum Steuern von Teilen, die die Klimaanlage bilden, wobei der Kühlwasser-Kreislauf (40) eine erste Passage zur Rückführung des Kühlwassers, das die Maschine (30) passiert, in die Maschine (30), eine zweite Passage zur Zuführung des Kühlmittels, das den Wärmetauscher mit dem Kühlmittel heizt, das von der ersten Passage abgezweigt wird und durch die Maschine passiert, aufweist, **dadurch gekennzeichnet, dass** der Kühlwasser-Kreislauf (40) ein elektrisch betriebenes Dreiwegeventil (41) zum Aufteilen des Kühlwassers an die erste Passage und die zweite Passage aufweist und wobei die Steuerung eine Kühlwasser-Zieltemperatur (TTC) so einstellt, dass die Kühlwasser-Zieltemperatur in Übereinstimmung mit mindestens einem einer Außenlufttemperatur und der Temperatur des im Heizbetrieb zu klimatisierenden Raums variabel ist, und das elektrisch betriebene Dreiwegeventil (41) so steuert, dass das Kühlwasser, das in die zweite Passage fließt, erhöht wird, wenn die Kühlwassertemperatur höher ist als die Kühlwasser-Zieltemperatur, wobei ein Temperaturpegel (T L), der die Temperaturbedingung der Klimaanlage repräsentiert, aus der Außenlufttemperatur und der Raumtemperatur berechnet wird, wobei die Kühlwasser-Zieltemperatur (TTC) aus dem berechneten Temperaturpegel (TL) unter Verwendung einer Umwandlungstabelle bestimmt wird, in der die Beziehung zwischen dem Temperaturpegel (TL) und der Kühlwasser-Zieltemperatur (TTC) vorher gehalten wird, oder unter Verwendung einer Umwandlungsgleichung der Umwandlung des Temperaturpegels (TL) zu der Kühlwasser-Zieltemperatur (TTC), und wobei eine untere Kühlwasser-Zieltemperatur TTC eingestellt wird, wenn es besser möglich ist abzuschätzen, dass es schwierig ist, den Kühlmitteldruck des Kühlmittel-Kreislaufs zu erhöhen, da die Innen-/Außen-Temperatur gering ist.

**2.** Klimaanlage nach Anspruch 1, wobei ein Lastpegel der Maschine erfasst wird, und wenn der Lastpegel einen vorgegebenen Pegel überschreitet, die Steuerung die Kühlwasser-Zieltemperatur zu der Minusseite korrigiert.

**3.** Klimaanlage nach Anspruch 1, wobei, wenn der Zustand, dass die Kühlwassertemperatur fortgesetzt gleich einer vorgegebenen tiefen Temperatur oder weniger für eine erste eingestellte Zeit oder länger ist, die Steuerung die Kühlwassertemperatur auf eine vorgegebene Zwangs-Zieltemperatur einstellt, sodass das Kühlwasser nur durch die erste Passage fließt.

**4.** Klimaanlage nach Anspruch 3, wobei, wenn die Kühlwassertemperatur auf die Zwangs-Zieltemperatur eingestellt ist, die Einstellung der Kühlwassertemperatur auf die Zwangs-Zieltemperatur aufgehoben wird, falls der Zustand, dass die Kühlwassertemperatur fortgesetzt auf einer vorgegebenen hohen Temperatur oder größer für eine zweite eingestellte Zeit oder mehr ist.

**5.** Klimaanlage nach Anspruch 1, wobei ein Abgas-Wärmetauscher zum Austragen der Wärme, die zwischen dem Abgas der Maschine und dem Kühlwasser ausgetauscht wird, in der ersten Passage angeordnet ist.

**6.** Klimaanlage nach Anspruch 1, wobei im Kühlbetrieb die Steuerung beurteilt, ob eine Inneneinheit der Klimaanlage unter einer Gefriertemperatur ist, und falls beurteilt wird, dass die Inneneinheit der Klimaanlage unter der Gefriertemperatur ist, die Steuerung die Kühlwasser-Zieltemperatur auf eine vorgegebene niedrige Temperatur einstellt, sodass das Kühlwasser in die zweite Passage fließt.

**Revendications**

**1.** Climatiseur ayant un moteur (30) pour entraîner un compresseur (21) dans un circuit de fluide frigorigène, un circuit d'eau de refroidissement (40) pour faire circuler de l'eau de refroidissement dans le moteur (30), un échangeur de chaleur de chauffage de fluide frigorigène pour réaliser l'échange de chaleur entre l'eau de refroidissement dans le circuit d'eau de refroidissement et le fluide frigorigène dans le circuit de fluide frigorigène, et un dispositif de commande (50) pour commander des pièces constituant le climatiseur,

dans lequel le circuit d'eau de refroidissement (40) comprend un premier passage pour renvoyer l'eau de refroidissement passant à travers le moteur (30) au moteur (30), un second passage pour alimenter l'échangeur de chaleur de chauffage de fluide frigorigène en eau de refroidissement qui est ramifiée à partir du premier passage et passe à travers le moteur, et **caractérisé en ce que** le circuit d'eau de refroidissement (40) comprend une vanne à trois voies à commande électrique (41) pour partager l'eau de refroidissement vers le premier passage et le second passage et le dispositif de commande règle une température cible d'eau de refroidissement (TTC) de telle sorte que la température cible d'eau de refroidissement soit variable en fonction d'une température d'air extérieur et/ou de la température d'une pièce qui doit être climatisée au cours d'une opération de chauffage, et commande la vanne à trois voies à commande électrique (41) de telle sorte que l'eau de refroidissement circulant dans le second passage soit accrue lorsque la température d'eau de refroidissement est plus élevée que la température cible d'eau de refroidissement, dans lequel un niveau de température (TL) représentant la condition de température du climatiseur est calculé à partir de la température d'air extérieur et de la température ambiante, la température cible d'eau de refroidissement (TTC) est déterminée à partir du niveau de température calculé (TL) en utilisant une table de conversion dans laquelle la relation entre le niveau de température (TL) et la température cible d'eau de refroidissement (TTC) est considérée à l'avance, ou en utilisant une équation de conversion consistant à convertir le niveau de température (TL) en température cible d'eau de refroidissement (TTC), et une température cible d'eau de refroidissement inférieure (TTC) est définie puisqu'il est estimé de manière plus plausible qu'il est difficile d'augmenter la pression du fluide réfrigérant du circuit de fluide réfrigérant parce que la température intérieure/extérieure est basse.

2. Climatiseur selon la revendication 1, dans lequel un niveau de charge du moteur est détecté et, lorsque le niveau de charge dépasse un niveau prédéterminé, le dispositif de commande corrige la température cible d'eau de refroidissement vers le côté moins.

3. Climatiseur selon la revendication 1, dans lequel, lorsque l'état dans lequel la température d'eau de refroidissement est égale ou inférieure à une température basse prédéterminée est poursuivi pendant un premier moment prédéterminé, ou plus longtemps, le dispositif de commande règle la température d'eau de refroidissement à une température cible de forçage prédéterminée de telle sorte que l'eau de refroidissement circule seulement à travers le premier passage.

4. Climatiseur selon la revendication 3, dans lequel, lorsque la température d'eau de refroidissement est réglée à la température cible de forçage, le réglage de la température d'eau de refroidissement à la température cible de forçage est libéré si l'état dans lequel la température d'eau de refroidissement est égale ou supérieure à une température élevée prédéterminée est poursuivi pendant un second moment prédéterminé, ou plus longtemps.

5. Climatiseur selon la revendication 1, dans lequel un échangeur de chaleur de gaz d'échappement pour réaliser l'échange de chaleur entre les gaz d'échappement du moteur et l'eau de refroidissement, est disposé dans le premier passage.

6. Climatiseur selon la revendication 1, dans lequel, au cours d'une opération de refroidissement, le dispositif de commande évalue si une unité intérieure du climatiseur se trouve à une température glaciale, et s'il est évalué que l'unité intérieure du climatiseur se trouve à la température glaciale, le dispositif de commande règle la température cible d'eau de refroidissement à une température basse prédéterminée de telle sorte que l'eau de refroidissement circule dans le second passage.

# FIG. 1

EP 1 724 134 B1

# FIG. 2

CONTROL OF ELECTRICALLY
-DRIVEN THREE-WAY VALVE

S1
OPERATION MODE? → COOLING

HEATING

S5
TTC CALCULATION
BASED ON TEMPERATURE
LEVEL(TL)

S2
FREEZING
TEMPERATURE? → YES

NO    S4
TTC=75℃

S3
TTC=60℃

S6
EG LOAD LEVEL? → ABOVE 4

TTC=TTC-5 ─S7

S8
COOLING
WATER TEMPERATURE? → BELOW 65℃

ABOVE 85℃

COUNT TIMER(TM1) ─S9

RESET TIMER(TM2) ─S10

S13
COUNT TIMER(TM2)

S14
TM2≧10 MINUTES? ← NO

YES

S15
RESET TIMER(TM1)

S11
TM1≧60 MINUTES? → YES

NO

TTC=85℃ ─S12

CALCULATION OF CORRECTION
AMOUNT OF ELECTRICALLY
-DRIVEN THREE-WAY VALVE ─S20

RETURN

# FIG. 3

**EP 1 724 134 B1**

**REFERENCES CITED IN THE DESCRIPTION**

**Patent documents cited in the description**

- JP 2003232581 A
- EP 1334852 A
- JP 03090430 B
- EP 1334851 A
- JP 2002332841 B